(19) Europäisches Patentamt
European Patent Office
Office européen des brevets

(11) **EP 2 578 811 B1**

(12) **EUROPEAN PATENT SPECIFICATION**

(45) Date of publication and mention
of the grant of the patent:
**08.06.2016 Bulletin 2016/23**

(51) Int Cl.:
*F01D 11/14* *(2006.01)*   *F01D 11/22* *(2006.01)*
*F01D 17/20* *(2006.01)*

(21) Application number: **12163802.7**

(22) Date of filing: **11.04.2012**

(54) **Method for determining position of rotating blades having variable thickness.**

Verfahren zur Bestimmung der Position sich drehender Klingen mit variabler Dicke.

Procédé permettant de déterminer la position de lames rotatives d'épaisseur variable.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2011 US 201161488346 P**

(43) Date of publication of application:
**10.04.2013 Bulletin 2013/15**

(73) Proprietor: **Pentair Thermal Management LLC
Menlo Park, CA 94025 (US)**

(72) Inventor: **Seccombe, Paul
Washington, Tyne and Wear NE37 3EZ (GB)**

(74) Representative: **Lawrence, John et al
Barker Brettell LLP
100 Hagley Road
Edgbaston
Birmingham B16 8QQ (GB)**

(56) References cited:
**EP-A1- 1 972 884       WO-A1-96/41118
US-A1- 2006 239 813**

## Description

### Background of the Disclosure

### Field of the Disclosure

This invention relates generally to the field of turbine blade tip clearance sensors, and more particularly to a method for compensating for axial movement of rotating turbine blades when making clearance measurements.

### Discussion of Related Art

The performance of a variety of turbomachinery depends strongly on the radial clearance between the tips of the rotating turbine blades and the turbine housing. Minimizing this radial clearance, or gap, between the blade tips and the housing maximizes the efficiency of the system. During testing or operation, however, this radial clearance may fluctuate due to, among other factors, the speed of the blade rotation and/or changes in temperature, both of which can result in slight changes in the length of the turbine blades. For example, high blade rotation speeds can cause the blades to expand/lengthen due to centrifugal force, while high temperatures can cause thermal expansion in the blades and the housing which can affect the gap between the two. Additionally, the axial position of the turbine shaft can change due to a variety of factors which, in turn, causes the axial position of the turbine blades to shift. The axial position of the blades may also be intentionally adjusted to accommodate changing operational and environmental conditions. Thus, to prevent loss of efficiency where the radial clearance is greater than desired, and to avoid possible contact between the blades and the housing which can damage the housing and blades, systems are often employed to monitor the radial clearance between the blade tips and the housing during testing or operation. In some engines this information can then be used as an input to dynamically change the radial clearance of the running engine.

Sensors placed in the housing can be used to determine the radial clearance between the turbine blade tips and the housing. Still, accurate determination of the actual clearance between the blades and housing remains a difficult task. Typically such sensors "look" over a small section of an array of rotating blade tips, and the sensor reads changes in clearance depending on how much of the blade tips the sensor "sees." For turbine blades having profiles of variable thickness, however, sensor output is affected not only by the clearance between the housing and the blades, but also by the particular area of the blade the sensor detects. Thus, current sensor arrangements may not provide accurate clearance indications where the turbine blades have shifted axially relative to the sensor(s), since the area of the blade presented to the sensor changes as its axial position changes with respect to the sensor(s).

While prior approaches have sought to accurately determine radial clearance of rotating blades from the housing using a variety of techniques and sensor technologies, compensation for the axial movement of the rotating blades relative to the housing has not previously been directly addressed. In most cases the problem is "avoided" by locating the sensor on a section of the blade where the thickness is close to "constant" over the expected axial movement.

Thus, there is a need for a system and method that compensates for the axial movement of rotating turbine blades by using sensor calibration data and provides an accurate determination of the radial clearance between the blade tips and the housing.

WO 96/41118 discloses a clearance measurement system for accurately calibrated non-contact capacitive measurement of small distances between relatively movable elements, in which a sensor disposed in a housing wall receives a constant bias voltage and forms a sensing capacitor with the moving targets, which move past the sensor. A blocking capacitor allows a signal generated at the sensor to pass to a constant gain amplifier, which amplifies the signal and passes the amplified signal to a computer for calculating the small distances between the relatively movable elements using the bias, voltage, the gain and the maxima and/or minima of the amplifier output signal.

US 2006/0239813 discloses a displacement sensor system and method of operation, in which a clearance sensing system for a rotating machine includes a plurality of sensor probes disposed within a stationary shroud of the rotating machine, each of the probes being adapted to measure a parameter indicative of an axial and a radial displacement of a rotating component within the shroud and to produce a signal that corresponds to the parameter. The parameter may include a capacitance between the rotating component and the sensor probe.

EP 1972884 discloses a multi sensor clearance probe with longitudinally and transversely spaced apart first and second sensors operable to measure first and second distances respectively between the sensors and a longitudinally spaced apart rotating rotor, the sensors operable to measure blade tip clearances between radially outer turbine blade tips and an annular stator shroud circumscribing the blade tips.

### Summary of the Disclosure

In accordance with the invention there is provided a method for calibrating a sensor, as defined by the appended claims.

In one aspect, a method is disclosed for using a sensor and sensor calibration data to compensate for the axial shift of variable thickness rotating blades with respect to a housing. The method may include generating a blade passing signal where a height of the blade passing signal correlates with a clearance between the rotating blades and the sensor, wherein the sensor is positioned in or adjacent to the housing. A width of the blade passing signal correlates with a thickness of the rotating blades relative to the sensor. The actual clearance between the rotating blades and the sensor can be mechanically measured to calibrate the blade passing signal with the mechanical measurement for a given axial position of the blades. This can be performed on a calibration rig with an accurate representation of the blading. These measurements and calibrations may be repeated for a variety of clearances and axial positions, and may be stored in memory. During subsequent operation and/or testing, the speed of the rotating blades and the width of the blade passing signal can be measured using the sensor to determine the thickness and axial position of the rotating blades. These values can be compared with the stored calibrations to determine an actual clearance between the sensor and the rotating blades.

In another aspect, a method is disclosed for using a plurality of sensors separated by a known distance, as well as sensor calibration data, to compensate for an axial shift of variable thickness rotating blades with respect to a housing. The method may include generating a series of sensor calibration curves that correlate the output of the plurality of sensors with a mechanically measured clearance between the rotating blades and the sensors for given axial positions of the blades relative to the sensors. The calibration curves may be stored. Using the output from each sensor, along with the known distance between the sensors, a particular stored calibration curve in the series of curves may be selected to provide the actual radial clearance and axial position of the rotation blades relative to the sensors. This, in turn, can be used to indicate the clearance between the blade tips and the housing, and the axial position.

A method for calibrating a sensor is disclosed. The method may include: positioning a sensor at a plurality of locations with respect to a rotatable blade; at each of the plurality of locations, generating a blade passing signal from the sensor, where the blade passing signal is representative of a characteristic of the rotatable blade; associating the characteristic of the blade passing signal at each of said plurality of locations with the characteristic of the rotatable blade; and storing the associated characteristics in memory as sensor calibration data.

A method for monitoring a radial clearance between a sensor and a plurality of rotating blades, comprising: using a sensor associated with a housing, generating a blade passing signal representative of a plurality of rotating blades; determining a pulse width of the blade passing signal; determining a blade speed; determining a thickness of the plurality of rotating blades using the determined pulse width of the blade passing signal and the determined blade speed; and using the blade thickness along with stored calibration data and a determined pulse height of the blade passing signal to obtain a clearance between the plurality of rotating blades and the housing.

A method for monitoring a radial clearance between a sensor and a plurality of rotating blades is disclosed. The method may comprise: using first and second sensors associated with a housing, generating first and second blade passing signal outputs, the first and second blade passing signal outputs being representative of a plurality of rotating blades; comparing the first and second blade passing signal outputs to stored calibration data, where the stored calibration data comprises a plurality of calibration curves associating a known axial position of the plurality of rotating blades with respect to each sensor with a known clearance between the housing and the plurality of rotating blades; where the difference between adjacent calibration curves is the equivalent of a known distance (delta) between the first and second sensors; and using the first and second blade passing signal outputs, the stored calibration data and the known delta to determine a common clearance between the plurality of rotating blades and the housing, the common clearance being the same for each of the first and second sensors.

**Brief Description of the Drawings**

The accompanying drawings illustrate exemplary embodiments of the disclosed system and method so far devised for the practical application of the principles thereof, and in which:

FIG. 1 is a cross-section of an exemplary gas turbine;

FIG. 2 is a side view of an interior portion of a turbine, showing relative positions of an exemplary blade, shaft, housing, and sensor;

FIG. 3 is an end view of the blade tip of FIG. 2 taken along line 3-3 of FIG. 2, showing the variable thickness profile of the blade as it would be presented to the sensor;

FIG. 4 is a graph showing the thickness of the blade of FIG. 2 as a function of its axial position relative to the sensor;

FIG. 5 is an exemplary blade passing signal (BPS) representing raw output of the sensor detecting an exemplary rotating blade;

FIG. 6 is a side view of an interior portion of a turbine, showing relative positions of an exemplary blade, turbine shaft, housing, and a pair of sensors;

FIG. 7 is an exemplary calibration curve for a given axial position of the blade of FIG. 2 showing correlation between a mechanically measured radial clearance between the sensor and the blade tip (in millimeters) and an output from the sensor (in Volts);

FIG. 8 is an exemplary series of calibration curves associated with different axial positions of the blade of FIG. 2 with respect to a sensor;

FIG. 9A is another exemplary series of calibration curves illustrating the correlation between sensor output and radial clearance for a variety of axial offsets between the blade of FIG. 2 and a sensor;

FIG. 9B is a further exemplary series of calibrations for given axial positions of the blade of FIG. 2 with respect to a sensor;

FIG. 10 is a graph depicting an exemplary series of calibration curves in three dimensions, showing correlation among sensor output, mechanically measured radial clearance from the rotating blade tips to the sensor or sensors, and axial positions of the rotating blades relative to sensor or sensors;

FIG. 11A is a flowchart illustrating an exemplary logic flow in accordance with an embodiment of the disclosed method;

FIG. 11B is a flowchart illustrating another exemplary logic flow in accordance with an embodiment of the disclosed method; and

FIG. 11C is a flowchart illustrating a further exemplary logic flow in accordance with an embodiment of the disclosed method.

## Detailed Description

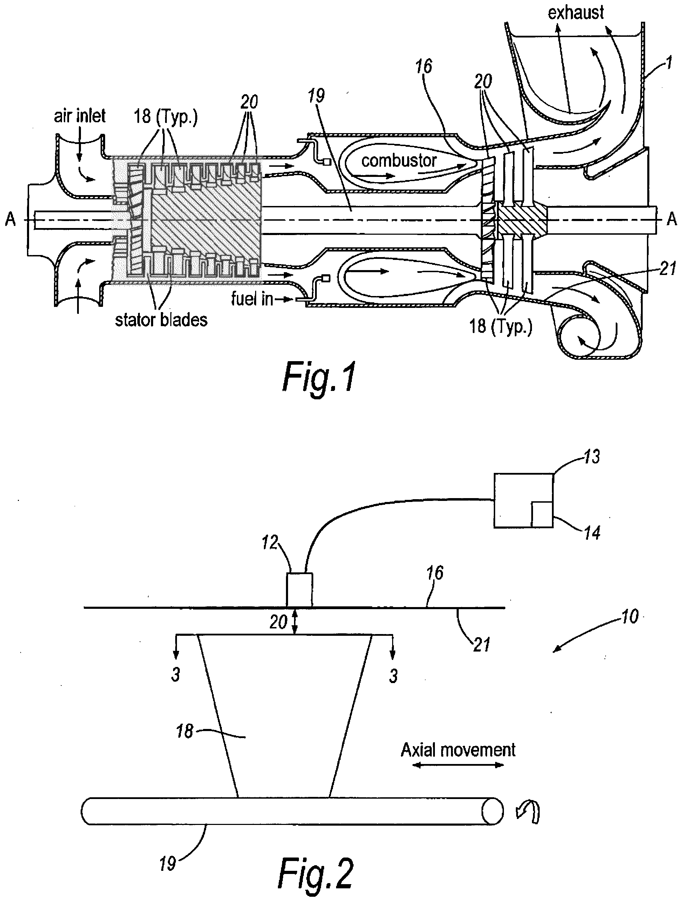

**FIG. 1** shows a cross-section view of an exemplary portion of a turbine 1. Such turbines typically include a housing 16, a plurality of rotatable blades 18 and a rotor 19 to which the plurality of blades are attached. In operation, gas passing by the blades 18 causes the blades to turn the rotor 19 about longitudinal axis A-A. As can be seen, gaps 20 exist between the tips of the blades 18 and the inner surface 21 of the housing 16. As can also be seen, the housing 16 has a conical shape in the turbine stage such that the inner surface 21 of the housing 16 is angled with respect to the longitudinal axis A-A. Although not shown as such, the compressor stage could also have a conical shape. The tips of the blades 18 may be angled so as to provide a substantially even gap 20 between the housing and blade across the tip of the blade. It will be appreciated that efficient operation of such a turbine depends on minimizing the gap 20 between the blades 18 and the inner surface 21 of the housing 16 so as to minimize bypass of gas around the blades. This need to minimize this gap must, of course, be balanced by the need to prevent contact between the blades and the housing. Due to the complex geometries of the housing, blades and rotor, and considering the fact that the turbine typically operates at high temperatures, differential expansion of the individual turbine components can affect the gap, which can affect turbine performance. Thus, a system and method are disclosed for allowing accurate monitoring of the gap during a wide variety of turbine operations. The system can be used with virtually any bladed system, to include a wide variety of gas and steam turbines, and at all stages of blading, including compressor and turbine stages, and including impellers turbochargers, fans and the like.

In one embodiment, the turbine 1 is of the type used in power plant applications. As will be appreciated, providing accurate monitoring of the clearance between the blades and the housing can be of advantage during initial performance testing as well as during normal operations. For example, during initial performance testing of the turbine by the turbine manufacturer, the disclosed system and method may be employed to enable test personnel to stop a test when an indication is provided that the blades are about to impact the housing.

During normal operations, the system and method may be used to facilitate warm restarts. As will be appreciated, turbines used in power plants are often shut down and started up according to the energy demands of users. When a turbine is shut down (*e.g.*, where energy demand is reduced) the housing may cool down at a faster rate than the blades. This differential contraction can cause the gap 20 between the housing and the blades to shrink to a less than desired value. Thus, after shut down, if the turbine is not restarted within a certain period of time, then it cannot be restarted until it is nearly completely cooled. This practice ensures that the turbine is not restarted with a critically small housing/blade gap that could cause housing or blade failure. This waiting period can represent a substantial time delay, which can be a problem where user energy demand increases during the delay period (i.e., where it would be desirable to have the turbine on line). By providing a positive measurement of the gap 20 between the housing and blades, the disclosed system and method can be used to facilitate faster turbine restarts by assuring the operator that a desired housing/blade gap exists prior to restart. In this way restart delays can be minimized.

The system and method can also be used to manipulate portions of the turbine 1 during operation in order to maintain a desired gap 20 between the blades and the housing. For example, the housing can be heated or cooled to maintain a desired gap. Alternatively, the axial positions of the blades could be adjusted to maintain a desired gap.

FIG. 2 illustrates an exemplary blade clearance monitoring system 10, comprising a sensor 12, housing 16, blade 18 and rotor 19. Although the description will proceed in relation to an exemplary turbine, it will be appreciated that such is merely an exemplary implementation of the disclosed system and method, and that other applications are envisioned. Thus, the system can be used with a wide variety of gas and steam turbines, and at all stages of blading, including compressor and turbine stages, and including impellers turbochargers, fans and the like. The sensor 12 may be coupled to a processor 13 having a non-volatile memory 14 associated therewith. Although not shown, a variety of signal conditioning components may be associated with the processor 13 for conditioning the signal generated by the sensor 12.

The sensor 12 may be any of a variety of sensor types suitable for measuring targets that change in one physical parameter but can have slight changes in another. A non-limiting list of appropriate sensor types includes capacitive sensors, eddy current sensors, radar sensors, laser sensors and the like. In one exemplary embodiment, a capacitive sensing arrangement is used in which the sensor 12, blade 18 and the gap 20 between the blade and housing 16 form a parallel plate capacitor. Thus, the sensor 12 comprises a first electrode, the blade 18 comprises a second electrode, and the gap 20 serves as the dielectric. Thus arranged, the sensor 12 senses capacitance, which is dependent on the size of the gap 20 between the sensor 12 and the blade 18. By measuring capacitance, the distance (gap 20) between the sensor 12 and blade 18 can be derived. Since the sensor 12 is mounted in or on the housing 16, determining the distance between the blade 18 and the sensor 12 enables easy determination of the distance between the blade 18 and the housing 16.

In the illustrated case, the capacitance can be determined by the following capacitance equation:

$$C = \epsilon_r \epsilon_0 A / d \qquad (1)$$

Where:

C = Capacitance
$\epsilon_r$ = Relative permittivity of the dielectric (i.e., air) between electrodes
$\epsilon_0$ = Permittivity of free space
A = Overlapping electrode area
d = Electrode separation

Where $\epsilon_r$, $\epsilon_0$, and A are assumed constant, C is inversely proportional to d.

In reference to FIG. 2, the gap 20 correlates to electrode separation "d" in the capacitance equation (1).

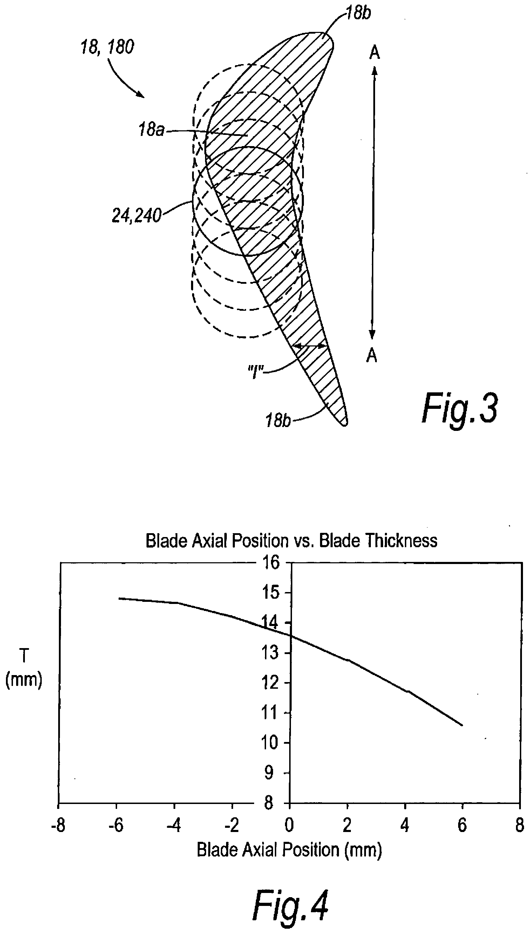

FIG. 3 is an end view of an exemplary blade 18 as it is "viewed" by the sensor 12. As can be seen, the blade 18 has a variable thickness "T," with a curved, or "teardrop," cross-section having a relative thick central section 18a, and a pair of relatively thinner end sections 18b. As previously noted, the individual blades 18 are connected to the shaft 19. As previously noted, during operation the shaft may move axially along the longitudinal axis A-A. Since the blades 18 are mounted to the shaft, this movement causes the individual blades 18 to move along the longitudinal axis as well. Since the sensor 12 is mounted in or on the housing 16, this longitudinal movement causes the blades 18 to shift axially with respect to the sensor 12. The blades 18 have a non-uniform thickness, and thus, the axial shift causes the sensor 12 to "view" a different blade thickness depending upon the blade's axial position with respect to the sensor. This thickness variation causes a change in the overlapping area "A" and hence the capacitance measured by the sensor 12, and thus it must be accounted for in order to provide a desired accuracy in determining the magnitude of the gap 20.

FIG. 3 shows an overlapping electrode area 24 that illustrates the thickness "T" of the blade 18 as it would be detected by sensor 12 at various axial positions of the blade 18 with respect to the sensor 12. This overlapping electrode area 24 corresponds to variable "A" of the same name in the capacitance equation (1). Since the overlapping electrode area 24 corresponds to the thickness "T" of the blade 18 presented to sensor 12, the thickness "T" of the blade 18 can be correlated to a unique axial position of blade 18 relative to sensor 12. The value of "A" in the capacitance equation (1) can, therefore, also be correlated to a unique axial position of the blade 18.

**FIG. 4** is a plot of the blade thickness "T" as a function of the axial position of the blade 18 relative to the sensor 12. As can be seen, individual thickness "T" values for the blade 18 are correlated with a unique axial position of the blade 18 relative to the sensor 12. Thus, if the thickness "T" of the blade 18 is known, then the axial position of the blade 18 can be easily determined.

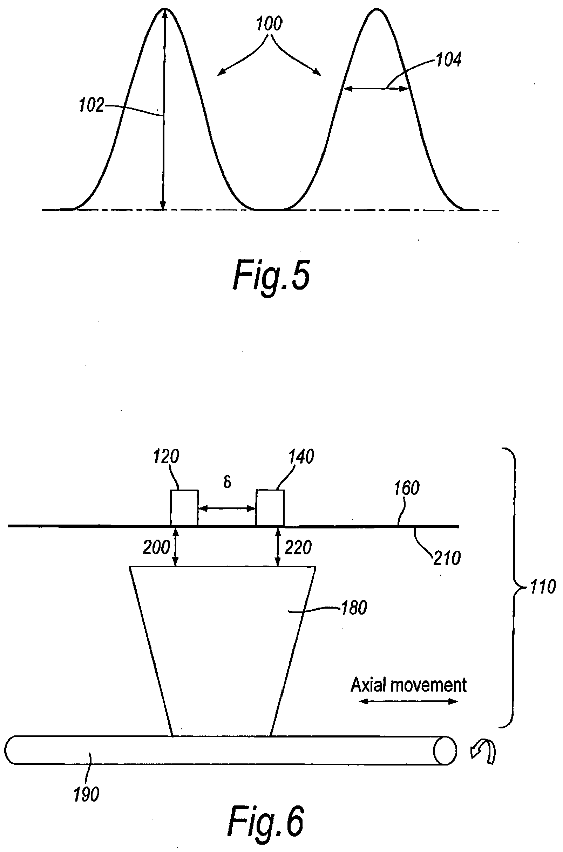

**FIG. 5** illustrates an example of raw output from the sensor 12 as it detects a rotating blade 18. The signal manifests as a series of pulses 100, which together are referred to as the "blade passing signal," (BPS). In the illustrated embodiment, each pulse 100 represents the change in capacitance as the blade 18 passes by the sensor 12. To calibrate the sensor 12, an amplitude 102 of the pulse 100 is measured and correlated to a mechanical measurement of the actual radial gap 20 for a variety of different axial positions and thicknesses of the blade 18 relative to the sensor 12. This mechanical measurement can be performed on a test bed so that a highly accurate and precise value of the radial gap 20 between the blade 18 and the sensor 12 can be obtained and correlated to a particular pulse amplitude. The calibration process can be performed for a desired number of different axial positions and thicknesses of blade 18, and the resulting calibration data can be stored in the non-volatile memory 14 **(FIG. 2).**

The width 104 of the BPS pulse 100 is a function of the size of the sensor 12, the thickness of blade 18, and the speed with which blade 18 passes the sensor 12. Since the size of the sensor 12 is known, and the passing speed of blade 18 can be measured by calculating a once per revolution signal or by pulse counting, the thickness of the blade 18 can be related to the pulse width 104 as seen in **FIG. 5.** By measuring the width 104 of the pulse 100 of the blade passing signal, the thickness of the blade 18 presented to sensor 12 can be determined. This, in turn, can be used to determine the actual axial position of blade 18 using the data presented in **FIG. 4.** By comparing the actual axial position of blade 18 to the previously collected calibration data, the actual radial clearance 20 between the blade 18 and the housing 16 can be determined.

**FIG. 6** illustrates a further embodiment of a blade tip clearance measurement apparatus 110, comprising a first and second sensors 120, 140, a housing 160, a blade 180 and a rotor 190. In this embodiment, the first sensor 120 is axially displaced from the second sensor 140 by a known distance "$\delta$" in the housing 160. It will be appreciated that the first sensor 120 may also be radially displaced (not shown) from the second sensor 140 by a known delta $\delta$ in the housing 160.

As with the embodiment of **FIG. 2,** the first and second sensors 120, 140 may be any of a variety of sensor types used to measure targets that primarily change in one physical parameter but can have slight changes in another. A non-limiting list of appropriate sensor types includes capacitive sensors, eddy current sensors, radar sensors, and the like. In addition, although the illustrated embodiment uses two sensors, it will be appreciated that more than two sensors can also be used. In addition, different types of sensors may be used together (e.g., a capacitive sensor and an eddy current sensor).

The sensors 120, 140 may be mounted flush to an inside surface 210 of the housing 160. Alternatively, the sensors may be set back in the housing 160, away from the inside surface 210. In one non-limiting exemplary embodiment, the sensors are recessed into the housing a distance of about 1.25 mm. In another embodiment the first and second sensors may be recessed into the housing by different amounts. For example, the first sensor 120 may be recessed into the housing a distance of about 0.5 mm, while the second sensor 140 may be recessed into the housing a distance of about 1.25 mm mils.

As with the single-sensor embodiment, in one exemplary embodiment the first and second sensors 120, 140 can each form a parallel plate capacitor in combination with the rotating blade 180 and associated gas gaps 200, 220. In this embodiment, the first sensor 120 measures capacitance dependent on the gap 200 between the first sensor 120 and the blade 180, while the second sensor 140 measures capacitance dependent on the gap 220 between the second sensor 140 and the blade 180. Again, capacitance may be determined according to previously-described capacitance formula (1). Thus, for the first sensor 120, gap 200 correlates to electrode separation "d" in the capacitance equation (1). Likewise, for the second sensor 140, gap 220 correlates to electrode separation "d" in the capacitance equation (1).

Referring again to **FIG. 3,** the profile of blade 180 is shown as it would be presented to either the first sensor 120 or the second sensor 140. The overlapping electrode area 240 represents the portion of blade 180 as detected either by the first sensor 120 or the second sensor 140, and corresponds to variable A of the same name in the capacitance equation (1). Since the overlapping electrode area 240 corresponds to the profile of blade 180 presented to either the first sensor 120 or the second sensor 140, the value of A in the capacitance equation (1) also changes for different axial positions of blade 180.

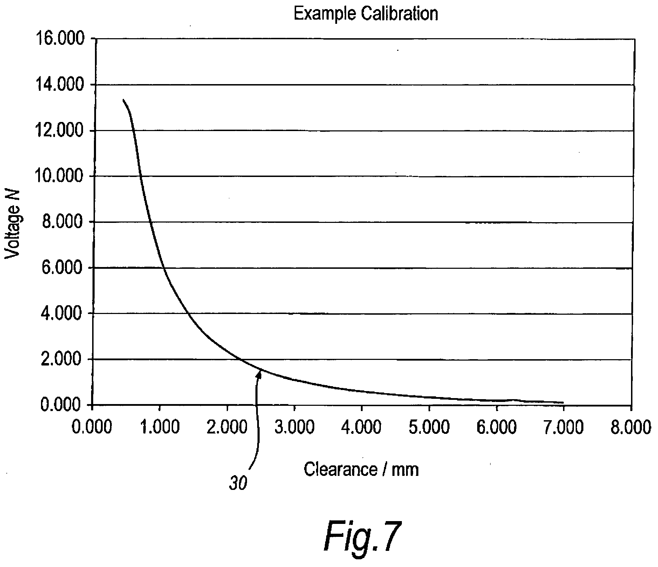

The first sensor 120 and the second sensor 140 can each be calibrated for a plurality of known axial positions and a plurality of known radial positions of blade 180 in similar fashion as that described in relation to the single sensor embodiment. **FIG. 7** depicts a calibration curve for a specific axial position of blade 180 showing the correlation between the mechanically measured radial clearance of blade 180 relative to either the first sensor 120 or the second sensor 140 and the output of either the first sensor 120 or the second sensor 140. In the illustrated embodiment, the sensor output is represented as a voltage. It will be appreciated that this is not critical, and that any other suitable electrical property could also be used.

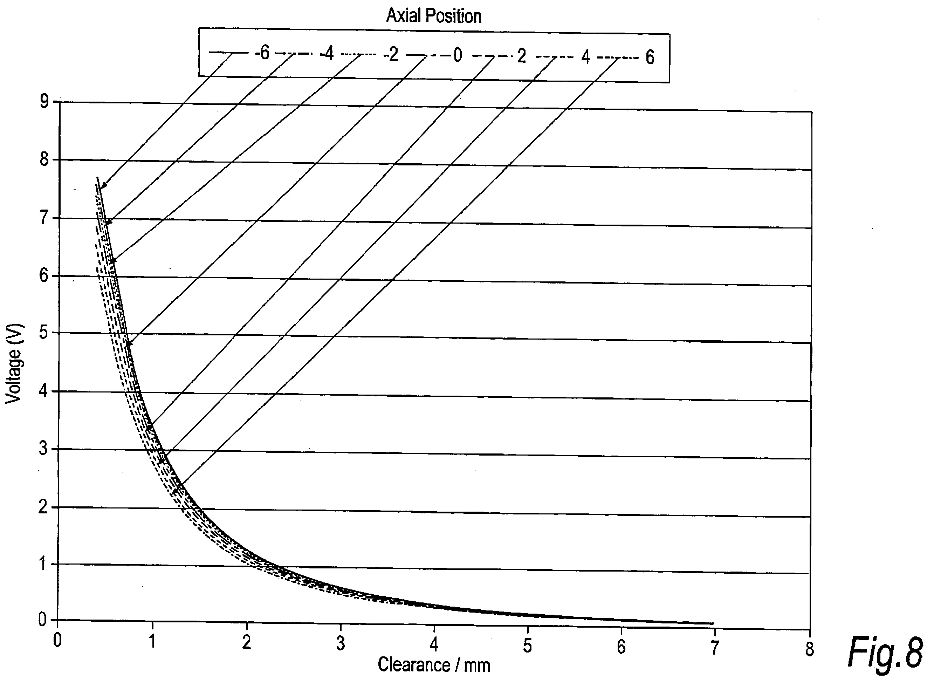

FIG. 8 illustrates a series of calibration curves, each associated with a specific axial offset between the blade 180 and either the first or second sensor 120, 140. In the illustration, the axial offsets ranges from -6 millimeters (mm) to +6 mm, with each curve representing a particular axial offset in increments of 2 mm, and with 0-mm offset being an arbitrary point on the blade 180 where it is expected that the sensor 120, 140 will be "looking." The figure shows how the correlation between the mechanically measured radial clearance of the blade 180 relative to the sensor 120, 140 and the output of that sensor 120, 140 depends on the axial position of the blade 180 relative to the sensor 120, 140. The calibration curves represent the axial displacement of blade 180 relative to either first sensor 120 or second sensor 140 in 2 mm increments ranging from-6 mm to 6 mm where the 0 point is an arbitrary point on blade 180 it is expected either first sensor 120 or second sensor 140 will be looking. As seen, in an embodiment the output of either sensor 120 or sensor 140 may be given in voltage or any other suitable electrical property that may be correlated to a physical condition of blade 180. Such calibration curves are generated and stored for given axial positions of the blade 180 relative to first sensor 120 and second sensor 140. During testing or operation of the turbine, the calibration curves may be used to determine the gap 200 between the housing 160 and a blade 18 based on the output from the first or second sensor 120, 140 and the known axial position of the blade with respect to the first or second sensor 120, 140.

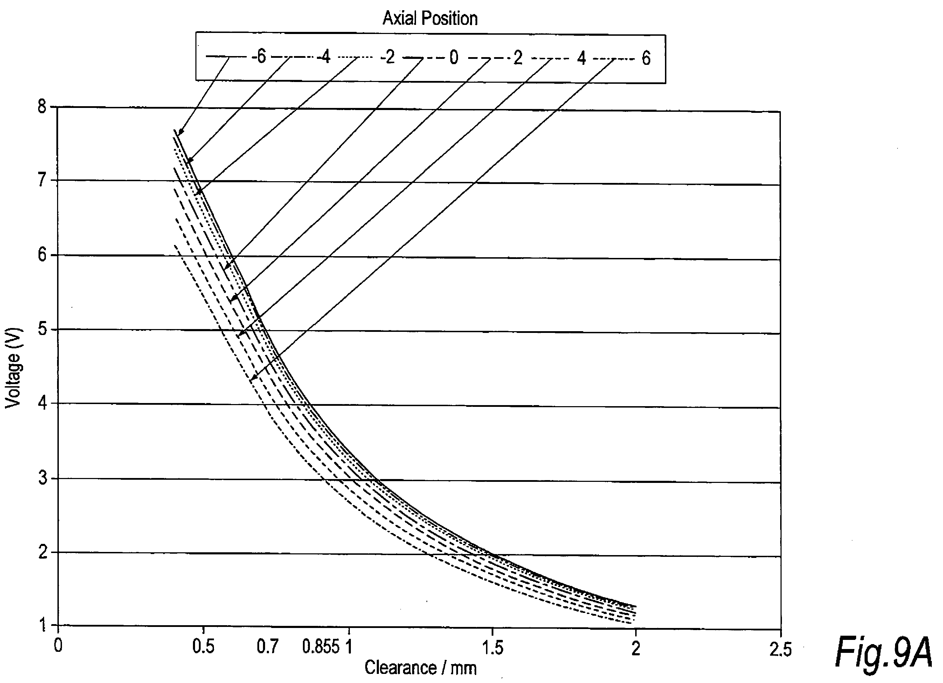

FIG. 9A illustrates an example series of calibration curves, where each curve is associated with a specific axial offset between the blade 180 and either the first or second sensor 120, 140. In the illustration, the axial offsets range from -6 mm to +6 mm. Again, the 0-mm offset is an arbitrary point on the blade 180 where it is expected that the sensor 120, 140 will be "looking." In one example, during turbine testing or operation, the first sensor 120 may produce an output signal of 4.0V, which as shown in FIG. 9A corresponds to a gap 200 having a radial clearance value of anywhere between 0.7 mm (associated with an axial position of +6 mm) and 0.855 mm (associated with an axial position of -6 mm). As this plot makes clear, for the same sensor output value, the gap 200 can be substantially different depending on the actual axial position of the blade 180 relative to the first or second sensor 120, 140.

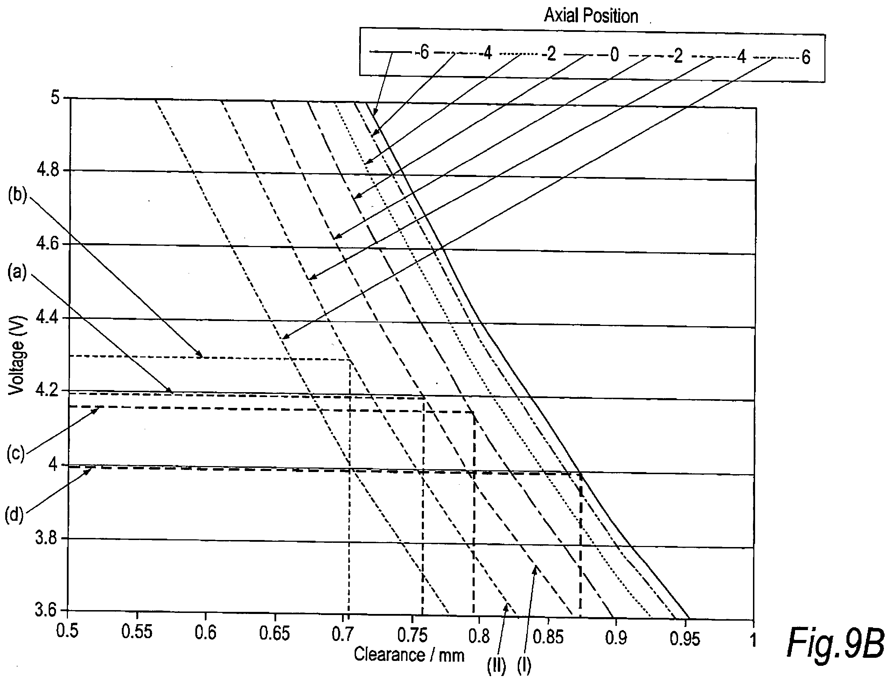

By obtaining readings from both the first and second sensors 120, 140 and comparing those readings to the calibration curves of FIG. 9B, the actual axial position and radial clearance of the blade 180 relative to both the first and second sensors 120, 140 can be determined. FIG. 9B illustrates an example of how a series of axial calibration curves for blade 180 relative to first sensor 120 and second sensor 140 can be used to accurately determine the actual axial and radial position of blade 180 relative to the first sensor 120 and the second sensor 140.

During turbine operation or testing the first and second sensors 120, 140 produce separate readings. For example, the first sensor may produce a reading of 4.0V which, as previously noted, corresponds to a gap 200 ranging from 0.7 mm to 0.855 mm depending upon the axial position of blade 180 relative to first sensor 120, as seen in FIG. 9A. The second sensor 140 may produce a reading of 4.2 V. Since the axial separation (delta $\delta$) between the first and second sensors is known (it can be measured during installation), then only one pair of calibration curves of the series of calibration curves in FIG. 9B can correspond to the same "clearance" value when these sensor output values are known.

An example is shown in relation to FIG. 9B. The difference between adjacent curves in FIG. 9B is the equivalent of the known delta ($\delta$) (i.e., 2 mm). In this example, the first sensor 120 provides a reading of 4.0V, and the second sensor 140 provides a reading of 4.2 V. To determine the appropriate blade "clearance" (the horizontal axis of FIG. 9B) a pair of adjacent curves must be identified in which an output of the first sensor 120 on the first curve results in a clearance that is the same as the clearance corresponding to the output of the second sensor 140 on an immediately adjacent curve. That is, the clearance associated with a 4.0V reading on the first curve must be the same as the clearance associated with a 4.2V reading on an immediately adjacent curve. In the FIG. 9B embodiment, curves "(I)" and "(II)" meet this criteria, and are thus selected as the appropriate curves. As can be seen, the clearance subtended at each of these output values on the associated curve is about 0.75 mm. That is, a vertical line (dotted line "(a)") subtended from the 4.2 V point on curve "I" passes through the 4.0V point on immediately adjacent curve "II" and also passes through the (approximately) 0.75 mm point on the horizontal (i.e., clearance) axis. The other possible combinations (identified by dotted lines "(b)," "(c)" and "(d)") do not meet the aforementioned criteria, and thus do not result in correct curve pairs according to the disclosed method.

Mathematically, the simultaneous solution for the appropriate pair of immediately adjacent curves can proceed according to the following logic:

**Given a Known delta ($\delta$) in Axial Position**

$$(1) \qquad V_{120} = F_{120} \left( Clearance_{120}, \text{ Axial Position}_{120} \right)$$

$$(2) \quad V_{140} = F_{140} \ (\text{Clearance}_{140}, \ \text{Axial Position}_{140})$$

(where $F_{120}$ and $F_{140}$ are functions (i.e., functions represented by the calibration curves))

$$(3a) \quad \text{Assume: Clearance}_{120} = \text{Clearance}_{140} = \text{Clearance}$$

$$(4a) \quad \text{Know: Axial position}_{120} = \text{Axial position}_{140} - (\delta)$$

*Therefore:*

$$(5a) \quad V_{120} = F_{120} \ (\text{Clearance, Axial Position}_{140} - (\delta))$$

$$(6a) \quad V_{140} = F_{140} \ (\text{Clearance, Axial Position}_{140})$$

*And*

Given $V_{120}$, $V_{140}$, $F_{120}$, $F_{140}$ and $\delta$, steps (5a) and (6a) can be solved for Clearance and Axial Position$_{140}$.

**Given a Known delta ($\delta$) in Radial Clearance**

$$(3b) \quad \text{Assume: Clearance}_{120} = \text{Clearance}_{140} - (\delta)$$

$$(4b) \quad \text{Know: Axial position}_{120} = \text{Axial Position}_{140} = \text{Axial Position}$$

$$(5b) \quad V_{120} = F_{120} \ (\text{Clearance}_{140} - (\delta), \ \text{Axial Position})$$

$$(6b) \quad V_{140} = F_{140} \ (\text{Clearance}_{140}, \ \text{Axial Position})$$

Given $V_{120}$, $V_{140}$, $F_{120}$, $F_{140}$ and ($\delta$), steps (5b) and (6b) can be solved for Clearance$_{140}$ and Axial Position

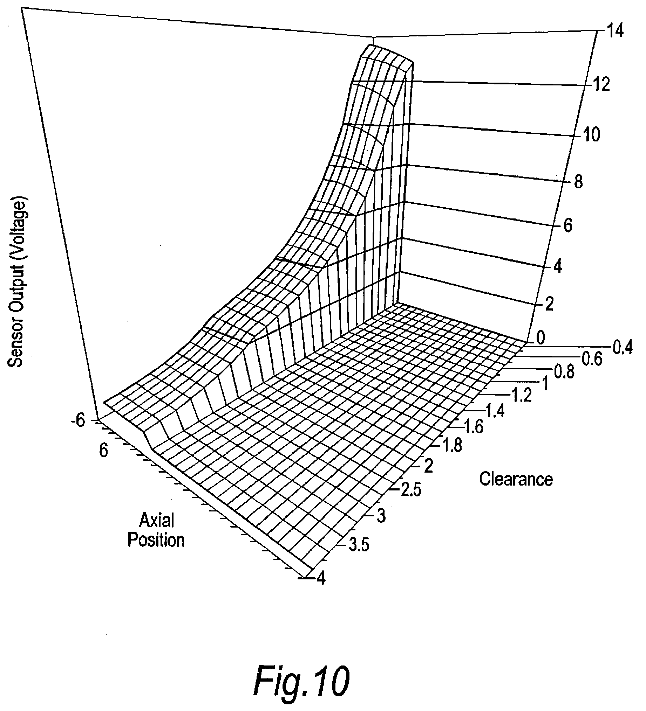

**FIG. 10** illustrates an example series of calibration curves in three dimensions, showing the correlation between the mechanically measured gap 200 ("clearance") between the blade 180 and the first or second sensor 120, 140, and the output from that sensor for given axial positions of the blade 180 relative to the sensor. The illustrated graph covers an axial offset range of from -6 mm to +6 mm, where the 0-mm point is an arbitrary location on the blade 180 where it is expected that either first sensor 120 or second sensor 140 will be "looking."

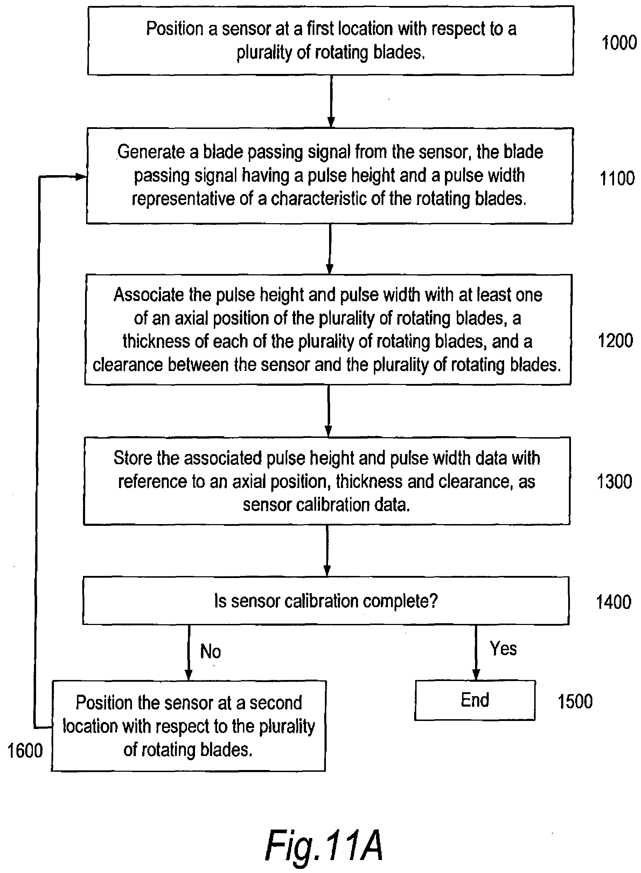

Referring now to **FIG. 11A,** an exemplary method using the disclosed system will be described in greater detail. At step 1000, a sensor is positioned at a first location with respect to a plurality of rotating blades. At step 1100, a blade passing signal is generated by the sensor. The blade passing signal includes a plurality of pulses each having a pulse height and a pulse width representative of a characteristic of the rotating blades. At step 1200, the pulse height and pulse width are associated with at least one of an axial position of the plurality of rotating blades, a thickness of each of the plurality of rotating blades, and a clearance between the sensor and the plurality of rotating blades. At step 1300, the associated pulse height and pulse width data are stored in memory with reference to an axial position, thickness and clearance, as sensor calibration data. At step 1400, a determination is made about whether sensor calibration is complete. If the answer is yes, then the process ends at step 1500. If, however, the answer is no, then at step 1600 the sensor is positioned at a second location with respect to the plurality of rotating blades. The method then returns to step 1100 and proceeds from there.

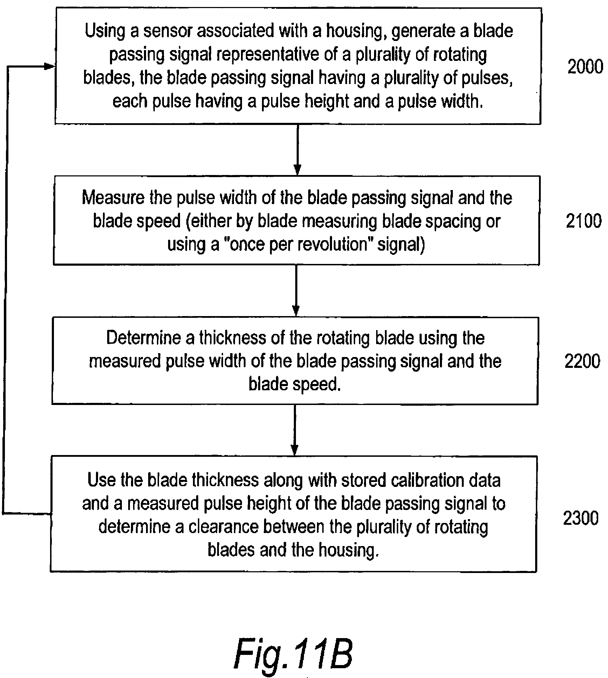

Referring to **FIG. 11B,** a second exemplary method using the disclosed system will be described in greater detail. At step 2000, a sensor associated with a housing generates a blade passing signal representative of a plurality of rotating blades, where the blade passing signal has a plurality of pulses, and each pulse has a pulse height and a pulse width. At step 2100, the pulse width of the blade passing signal and the blade speed (either by blade measuring blade spacing or using a "once per rev" signal) are measured. At step 2200, the blade thickness is determined from the measured pulse width of the blade passing signal and the blade speed. At step 2300, the blade thickness is used along with stored calibration data and the measured pulse height to determine a clearance between the plurality of rotating blades and the housing. The process then returns to step 2000 and repeats.

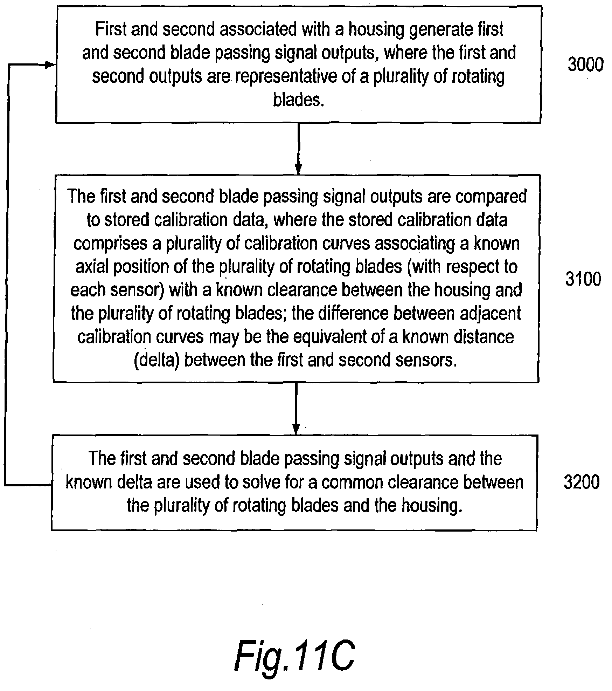

Referring now to **FIG. 11C,** a third exemplary method using the disclosed system will be described in greater detail. At step 3000, first and second sensors associated with a housing generate first and second blade passing signal outputs, where the first and second outputs are representative of a plurality of rotating blades. At step 3100, the first and second blade passing signal outputs are compared to stored calibration data, where the stored calibration data comprise a plurality of calibration curves associating a known axial position of the plurality of rotating blades (with respect to each sensor) with a known clearance between the housing and the plurality of rotating blades. In one embodiment, the difference between adjacent calibration curves is the equivalent of a known distance between the first and second sensors *(i.e.,* a known (delta $\delta$)). At step 3200, the first and second outputs and the known delta are used to solve for a common clearance between the plurality of rotating blades and the housing. The process then returns to step 3000.

Some embodiments of the disclosed system may be implemented, for example, using a storage medium, a computer-readable medium or an article of manufacture which may store an instruction or a set of instructions that, if executed by a machine, may cause the machine to perform a method and/or operations in accordance with embodiments of the disclosure. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit, for example, memory (including non-transitory memory), removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

While certain embodiments of the disclosure have been described, it is not intended that the disclosure be limited thereto. Rather, it is intended that the disclosure be as broad in scope as the art will allow and that the specification be read likewise. As such, the above description should not be construed as limiting, but merely as examples of particular embodiments.

**Claims**

1. A method for calibrating a sensor, comprising:

    positioning (1000) a sensor (12) at a plurality of axial locations with respect to a rotatable blade (18);
    at each of said plurality of locations, generating (1100) a blade passing signal from the sensor (12), the blade passing signal representative of a characteristic of the rotatable blade (18);
    associating (1200) the characteristic of the blade passing signal at each of said plurality of axial locations with the characteristic of the rotatable blade (18); and
    storing (1300) the associated characteristics in memory as sensor calibration data.

2. A method of claim 1, wherein the characteristic of the rotatable blade (18) is an axial position of the rotatable blade (18) with respect to the sensor (12).

3. A method of claim 1, wherein the characteristic of the rotatable blade (18) is a thickness of the rotatable blade (18).

4. A method of claim 1, wherein the characteristic of the rotatable blade (18) is a radial clearance (20) between the sensor (12) and the rotatable blade (18).

5. A method according to any of claims 2 to 4, wherein the characteristic of the blade passing signal is a pulse height.

6. A method according to any of claims 2 to 4, wherein the characteristic of the blade passing signal is a pulse width.

7. The method of claim 1, wherein the step of positioning a sensor (12) at a plurality of locations comprises one of:

positioning the sensor (12) at a plurality of axial locations with respect to the rotatable blade (18);
positioning the sensor (12) at a plurality of radial distances from the rotatable blade (18);
measuring a radial clearance (20) between the sensor (12) and the rotatable blade (18); and
measuring an axial offset between the sensor (12) and the rotatable blade (18).

8. A method of claim 1, wherein the step of positioning a sensor (12) comprises positioning first and second sensors (120, 140) displaced at a distance $\delta$ from each other, wherein each of said plurality of sensors (120, 140) generates a blade passing signal representative of a characteristic of a plurality of rotating blades; and wherein the step of associating the characteristic of the blade passing signal at each of said plurality of locations with the characteristic of the rotatable blade (180) comprises:

associating the blade passing signal from the first sensor (120), the blade passing signal from the second sensor (140), and the distance $\delta$, and storing the associated data in memory.

9. A method of claim 1, wherein the step of positioning a sensor (12) comprises one of positioning the sensor (12) such that the sensor (12), the rotatable blade (18), and a gas gap formed there between form a parallel plate capacitor, and positioning the sensor (12) in a turbine housing (16), and wherein the rotatable blade (18) comprises a plurality of rotatable turbine blades.


**Patentansprüche**

1. Ein Verfahren für die Kalibrierung eines Sensors, das Folgendes aufweist:

die Positionierung (1000) eines Sensors (12) an einer Vielzahl von axialen Positionen im Verhältnis zu einer drehbaren Klinge (18);
an jeder der besagten Vielzahl von Positionen, die Erzeugung (1100) eines Klingen-Durchgangssignals des Sensors (12), das Klingen-Durchgangssignal repräsentiert dabei eine Eigenschaft der drehbaren Klinge (18);
die Verbindung (1200) der Eigenschaft des Klingen-Durchgangssignals an jeder der besagten Vielzahl von axialen Positionen mit der Eigenschaft der drehbaren Klinge (18); und
die Speicherung (1300) der verbundenen Eigenschaften im Datenspeicher als Sensor-Kalibrierungsdaten.

2. Ein Verfahren gemäß Anspruch 1, wobei die Eigenschaft der drehbaren Klinge (18) eine axiale Position der drehbaren Klinge (18) im Verhältnis zum Sensor (12) ist.

3. Verfahren gemäß Anspruch 1, wobei die Eigenschaft der drehbaren Klinge (18) eine Dicke der drehbaren Klinge (18) ist.

4. Ein Verfahren gemäß Anspruch 1, wobei die Eigenschaft der drehbaren Klinge (18) ein radiales Spiel (20) zwischen dem Sensor (12) und der drehbaren Klinge (18) ist.

5. Ein Verfahren gemäß eines der Ansprüche 2 bis 4, wobei die Eigenschaft des Klingen-Durchgangssignals eine Impulshöhe ist.

6. Ein Verfahren gemäß eines der Ansprüche 2 bis 4, wobei die Eigenschaft des Klingen-Durchgangssignals eine Impulsbreite ist.

7. Das Verfahren gemäß Anspruch 1, wobei der Schritt der Positionierung eines Sensors (12) an einer Vielzahl von Positionen eines der folgenden Elemente aufweist:

die Positionierung des Sensors (12) an einer Vielzahl von axialen Positionen im Verhältnis zur drehbaren Klinge (18);
die Positionierung des Sensors (12) in einer Vielfalt von radialen Abständen von der drehbaren Klinge (18);
die Messung eines radialen Spiels (20) zwischen dem Sensor (12) und der drehbaren Klinge (18); und
die Messung einer axialen Versetzung zwischen dem Sensor (12) und der drehbaren Klinge (18).

**8.** Ein Verfahren gemäß Anspruch 1, wobei der Schritt der Positionierung eines Sensors (12) die Positionierung des ersten und zweiten Sensors (120, 140) versetzt um einen Abstand δ voneinander aufweist, wobei jeder der besagten Vielzahl von Sensoren (120, 140) ein Klingen-Durchgangssignal erzeugt, das eine Eigenschaft einer Vielzahl drehbarer Klingen repräsentiert; und wobei der Schritt der Verbindung der Eigenschaft des Klingen-Durchgangssignals an jeder der besagten Vielzahl von Positionen mit der Eigenschaft der drehbaren Klinge (180) Folgendes aufweist:

die Verbindung des Klingen-Durchgangssignals des ersten Sensors (120), des Klingen-Durchgangssignals des zweiten Sensors (140) und des Abstands δ, und die Speicherung der verbundenen Daten im Speicher.

**9.** Ein Verfahren gemäß Anspruch 1, wobei der Schritt der Positionierung eines Sensors (12) entweder die Positionierung des Sensors (12) in der Form aufweist, dass der Sensor (12), die drehbare Klinge (18) und ein dazwischen gebildeter Gasspalt einen parallelen Plattenkondensator bilden, oder die Positionierung eines Sensors (12) in einem Triebwerksgehäuse (16), und wobei die drehbare Klinge (18) eine Vielzahl von drehbaren Triebwerksklingen aufweist.

## Revendications

**1.** Un procédé de calibrage d'un capteur, comprenant :

le positionnement (1000) d'un capteur (12) au niveau d'une pluralité d'emplacements axiaux par rapport à une pale rotative (18),
au niveau de chaque emplacement de ladite pluralité d'emplacements, la génération (1100) d'un signal de passage de pale à partir du capteur (12), le signal de passage de pale étant représentatif d'une caractéristique de la pale rotative (18),
l'association (1200) de la caractéristique du signal de passage de pale à chaque emplacement de ladite pluralité d'emplacements axiaux à la caractéristique de la pale rotative (18), et
la conservation en mémoire (1300) des caractéristiques associées sous la forme de données de calibrage de capteur.

**2.** Un procédé selon la Revendication 1, où la caractéristique de la pale rotative (18) est une position axiale de la pale rotative (18) par rapport au capteur (12).

**3.** Un procédé selon la Revendication 1, où la caractéristique de la pale rotative (18) est une épaisseur de la pale rotative (18).

**4.** Un procédé selon la Revendication 1, où la caractéristique de la pale rotative (18) est un dégagement radial (20) entre le capteur (12) et la pale rotative (18).

**5.** Un procédé selon l'une quelconque des Revendications 2 à 4, où la caractéristique du signal de passage de pale est une hauteur d'impulsion.

**6.** Un procédé selon l'une quelconque des Revendications 2 à 4, où la caractéristique du signal de passage de pale est une largeur d'impulsion.

**7.** Le procédé selon la Revendication 1, où l'opération de positionnement d'un capteur (12) au niveau d'une pluralité d'emplacements comprend une opération parmi :

le positionnement du capteur (12) au niveau d'une pluralité d'emplacements axiaux par rapport à la pale rotative (18),
le positionnement du capteur (12) au niveau d'une pluralité de distances radiales à partir de la pale rotative (18),
la mesure d'un dégagement radial (20) entre le capteur (12) et la pale rotative (18), et
la mesure d'un décalage axial entre le capteur (12) et la pale rotative (18).

**8.** Un procédé selon la Revendication 1, où l'opération de positionnement d'un capteur (12) comprend le positionnement d'un premier et d'un deuxième capteurs (120, 140) déplacés à une distance δ l'un de l'autre, où chaque capteur de ladite pluralité de capteurs (120, 140) génère un signal de passage de pale représentatif d'une caractéristique d'une pluralité de pales rotatives, et où l'opération d'association de la caractéristique du signal de passage de pale à chaque emplacement de ladite pluralité d'emplacements à la caractéristique de la pale rotative (180) comprend :

l'association du signal de passage de pale provenant du premier capteur (120), du signal de passage de pale provenant du deuxième capteur (140) et de la distance $\delta$, et la conservation en mémoire des données associées.

9. Un procédé selon la Revendication 1, où l'opération de positionnement d'un capteur (12) comprend un positionnement parmi le positionnement du capteur (12) de sorte que le capteur (12), la pale rotative (18) et une lame de gaz formée entre ceux-ci forment un condensateur à plaques parallèles et le positionnement du capteur (12) dans un logement de turbine (16), et où la pale rotative (18) comprend une pluralité de pales de turbine rotatives.

exhaust

air inlet    18 (Typ.)    20    19    16    20    1

combustor

A ———————————————————— A

fuel in →

stator blades    18 (Typ.)    21

*Fig.1*

13

12    16

20    21    10

3    3

18

Axial movement

19    *Fig.2*

*18, 180*

*18b*

*18a*

*24,240*

A

A

*"T"*

*18b*

*Fig.3*

Blade Axial Position vs. Blade Thickness

T
(mm)

16
15
14
13
12
11
10
9
8

-8    -6    -4    -2    0    2    4    6    8
Blade Axial Position (mm)

*Fig.4*

**Fig.5**

Axial movement

**Fig.6**

Fig.7

Fig.8

Axial Position

Voltage (V)

Clearance / mm

EP 2 578 811 B1

Fig.9A

EP 2 578 811 B1

Fig.9B

*Fig.10*

```
┌─────────────────────────────────────────────────────┐
│   Position a sensor at a first location with respect to a   │     1000
│              plurality of rotating blades.              │
└─────────────────────────────────────────────────────┘
                          │
                          ▼
┌─────────────────────────────────────────────────────┐
│  Generate a blade passing signal from the sensor, the blade  │
│   passing signal having a pulse height and a pulse width    │     1100
│    representative of a characteristic of the rotating blades.  │
└─────────────────────────────────────────────────────┘
                          │
                          ▼
┌─────────────────────────────────────────────────────┐
│   Associate the pulse height and pulse width with at least one  │
│    of an axial position of the plurality of rotating blades, a   │
│    thickness of each of the plurality of rotating blades, and a  │     1200
│  clearance between the sensor and the plurality of rotating blades. │
└─────────────────────────────────────────────────────┘
                          │
                          ▼
┌─────────────────────────────────────────────────────┐
│   Store the associated pulse height and pulse width data with  │
│   reference to an axial position, thickness and clearance, as   │     1300
│                    sensor calibration data.               │
└─────────────────────────────────────────────────────┘
                          │
                          ▼
┌─────────────────────────────────────────────────────┐
│                Is sensor calibration complete?              │     1400
└─────────────────────────────────────────────────────┘
          │ No                              │ Yes
          ▼                                 ▼
┌──────────────────────────┐        ┌──────────────┐
│  Position the sensor at a second  │        │     End      │     1500
│  location with respect to the plurality │        └──────────────┘
│          of rotating blades.        │
└──────────────────────────┘
   1600
```

*Fig.11A*

Using a sensor associated with a housing, generate a blade passing signal representative of a plurality of rotating blades, the blade passing signal having a plurality of pulses, each pulse having a pulse height and a pulse width.

2000

Measure the pulse width of the blade passing signal and the blade speed (either by blade measuring blade spacing or using a "once per revolution" signal)

2100

Determine a thickness of the rotating blade using the measured pulse width of the blade passing signal and the blade speed.

2200

Use the blade thickness along with stored calibration data and a measured pulse height of the blade passing signal to determine a clearance between the plurality of rotating blades and the housing.

2300

*Fig.11B*

First and second associated with a housing generate first and second blade passing signal outputs, where the first and second outputs are representative of a plurality of rotating blades.

3000

The first and second blade passing signal outputs are compared to stored calibration data, where the stored calibration data comprises a plurality of calibration curves associating a known axial position of the plurality of rotating blades (with respect to each sensor) with a known clearance between the housing and the plurality of rotating blades; the difference between adjacent calibration curves may be the equivalent of a known distance (delta) between the first and second sensors.

3100

The first and second blade passing signal outputs and the known delta are used to solve for a common clearance between the plurality of rotating blades and the housing.

3200

*Fig.11C*

**EP 2 578 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9641118 A
- US 20060239813 A
- EP 1972884 A